# EUROPEAN PATENT SPECIFICATION

(11) **EP 1 705 782 B1**
(45) Date of publication and mention of the grant of the patent: **15.04.2009**
(21) Application number: 06114179.2
(22) Date of filing: 13.06.2002
(51) Int. Cl.: H02K 15/14, H02K 5/15, H02K 5/173, H02K 1/17, H02K 9/06, H02K 15/12, H02K 15/02

(54) **Motor for a power tool**
Motor für ein Elektrowerkzeug
Moteur pour outil électrique

(30) Priority: 14.06.2001 US 298261 P; 12.06.2002 US 170996
(43) Date of publication of application: 27.09.2006
(62) Divisional of application: 02734797.0
(73) Proprietor: Black & Decker, Inc., Newark, DE 19711 (US)
(72) Inventor: Ortt, Earl M, Bel Air, Ma 21014 (US); Verbrugge, Brandon, Towson, Ma 21286 (US); Du, Hung T, Reisterstown, Ma 21136 (US); Davies, Morris, Stewartstown, Pe 17363 (US)
(74) Representative: Bell, Ian Stephen

(56) References cited:
- FR-A- 709 084
- GB-A- 2 003 674
- US-A- 4 377 762
- US-A- 4 793 054
- US-A- 5 907 208

## Description

The present invention relates to power tools and, more particularly, to motors for power tools.

All electric power tools, whether AC or DC powered, utilize motors to drive the outputs of the tools. Motors are a critical part of the power tool. Designers strive to improve various aspects of the motors in power tools. Specifically, designers strive to reduce motor size while increasing motor output. Designers try to reduce heat created by the motor. Designers strive to reduce the number of parts associated with the motor. Also, designers strive to reduce the possibility of demagnetization of the motor during operation. In short, motor improvement improves the overall performance of the power tool.

Examples of power tools of the prior art which demonstrate some of the problems set out above are disclosed in US4377762, FR709084, US5907208, GB2003674 and US4793054.

The present invention provides the art with an improved motor assembly. The motor includes various features which reduce the total number of parts in the motor, improve assembly, enable simpler manufacturing techniques, as well as increase the resistance of the motor to demagnetization.

According to the present invention, there, is provided an armature shaft assembly comprising the features of claim 1.
Further embodiments of the invention are claimed in the dependent claims.

From the following detailed description, taken in conjunction with the drawings and subjoined claims, other objects and advantages of the present invention will become apparent to those skilled in the art.
Figure 1 is a partially in cross-section plan view of a power tool in accordance with the present invention.
Figure 2 is an exploded view of the motor of Figure 1.
Figure 3a is a cross-section view of the end cap of Figure 2 along line 3-3 thereof.
Figure 3b is a cross-section view of the end cap of Figure 2 prior to deforming of the end cap.
Figure 4a is an exploded perspective view of the armature assembly of Figure 2.
Figure 4b is an assembled view of Figure 4a.
Figure 4c is a cross-section view through lines 4c-4c of Figure 4b.
Figure 4d is a cross-section view of Figure 4b along line 4d-4d thereof.
Figure 5 is an enlarged section view of the motor of Figure 1.
Figure 6a is a perspective view of a fan prior to assembly with the armature assembly.
Figure 6b is an elevation view partially in section of the armature assembly with the fan attached.
Figure 7a is an exploded perspective view of the motor can with end caps.
Figure 7b is a perspective view of one of the end caps on the motor can.
Figure 7c is an elevation view of the end cap secured to the motor can.
Figure 8a is a perspective view partially in section of the magnet mechanism for providing an increase resistance to demagnetization.
Figure 8b is a perspective view partially in section of the magnet mechanism within the motor can.
Figure 8c is a perspective view partially in section of the motor can being a part of the magnet member.

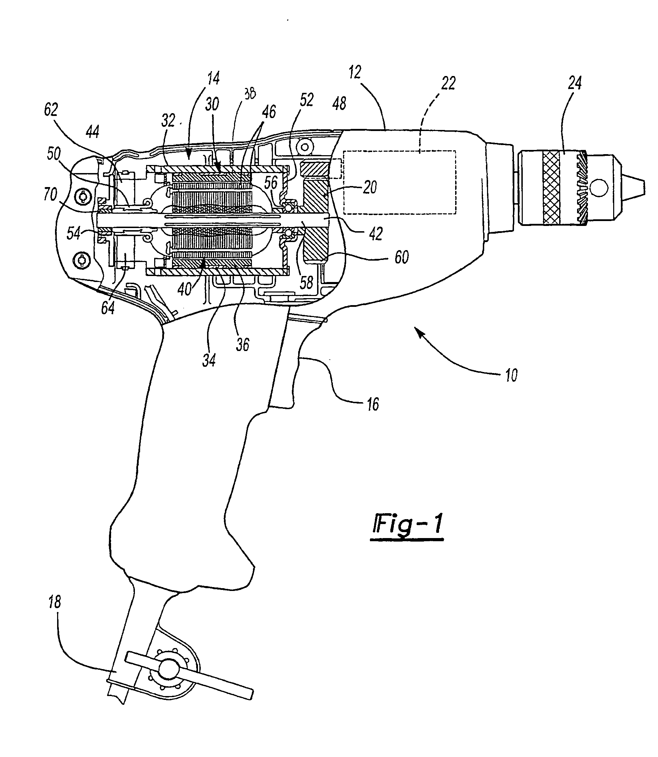

Turning to Figure 1, a power tool in accordance with the present invention is illustrated and designated with the reference numeral 10. The power tool 10 is illustrated as a drill; however, any type of power tool such as a screwdriver, sander, rotary tool, clippers, saw or the like which utilize an electric motor may be used with the motor of the present invention. The power tool 10 includes a housing 12 which surrounds a motor 14. An activation member 16 is coupled with the motor 14 as well as with a power source 18. The power source 18 may be a power cord (AC current) as shown or the power tool may have a battery (DC current). The motor 14 is coupled with an output 20 which may include a transmission 22 and a chuck 24 to retain a tool (not shown) with the drill.

The motor 14 includes a magnetic stator assembly 30 which includes a motor can 32, flux ring 34, and magnets 36 and 38. An armature 40 includes a shaft 42, a rotor 44 with laminations 46 and windings 48, as well as a commutator 50 coupled with the shaft 42. The motor also includes end caps 52 and 54. The end cap 52 includes a bearing 56 which balances one end of the shaft 58 which is coupled with a pinion 60. Brushes 62 and 64 are associated with the commutator 50. A bearing 70 is coupled with the end cap 54 to balance rotation of the shaft 42.

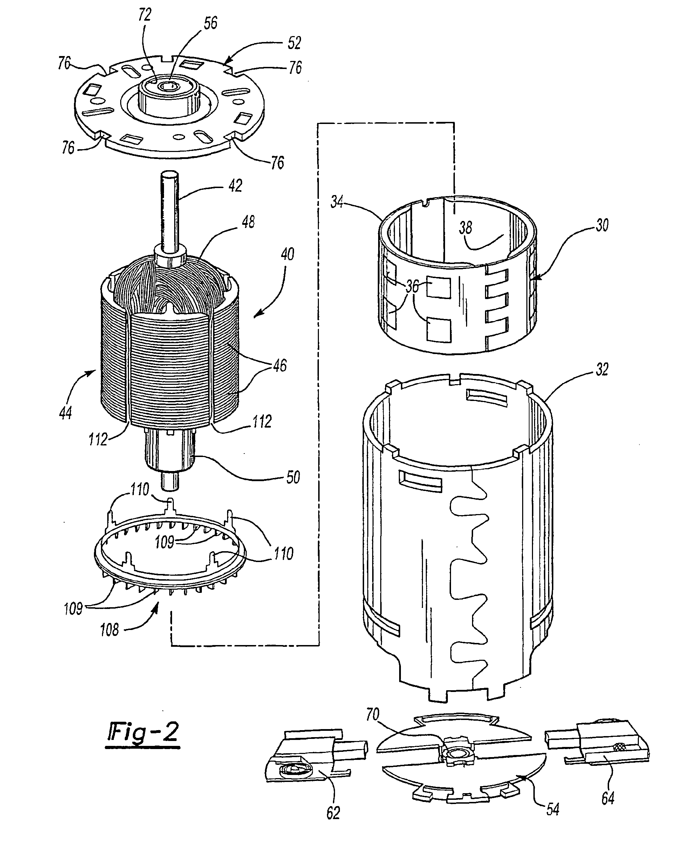

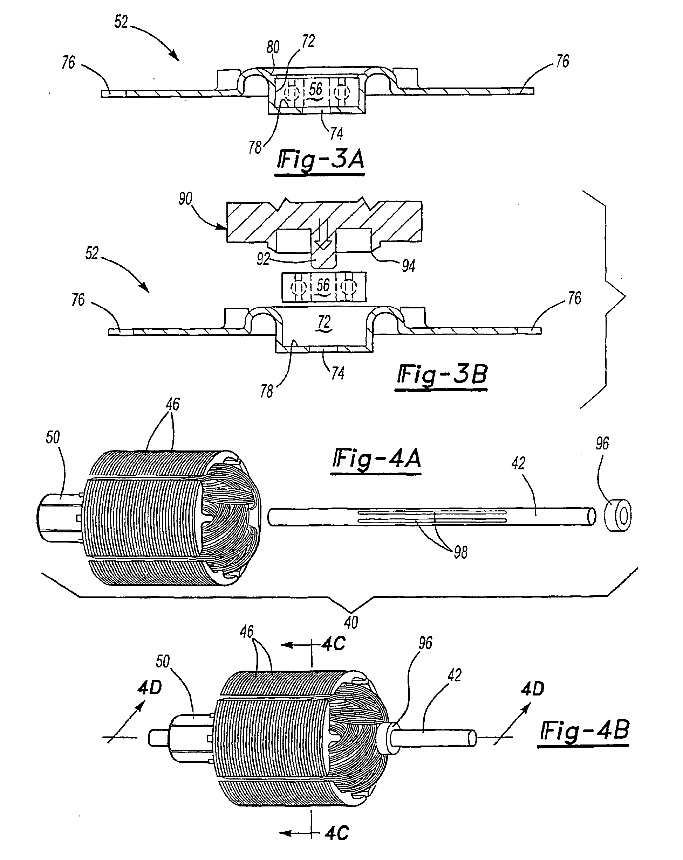

Turning to Figures 2 and 3, the end cap 52 is illustrated. The end cap 52 has an overall circular configuration with a central recess 72 housing bearing 56. The recess 72 includes a bore 74 which enables passage of the shaft 42. The end cap 52 also includes a plurality of cut-outs or recesses 76 on the periphery of the end cap 52. A shoulder 78 is formed by a deformation of a portion of the end cap adjacent recess 72. The deformation groove 80 may be circular and surround the bearing 56. Alternatively, there may be a number of disjointed groove segments forming a circular pattern. Also, the end cap 52 is generally formed from a metallic material which may be stamped with a desired configuration as well as including the recesses and apertures.

Turning to Figure 3b, the method for forming the end cap will be better explained. Figure 3b illustrates a cross-section of the end cap 52 prior to the bearing 56 being permanently affixed to the end cap 52. As can be seen, the recess 72 is sized to receive the bearing 56. The bearing 56 is positioned within the recess 72. A tool 90 having a centering member 92 and a deformation member 94 is positioned with respect to the end cap so that the positioning member 92 fits within the bore of the bearing 56 as well as the bore 74 of the end plate 52. As this occurs, the deformation member 94 contacts the end cap 52 forming the shoulder 78. Accordingly, the deformation member 94 may be continuous or discontinuous (as shown in phantom in Figure 3b) to form the groove 80.

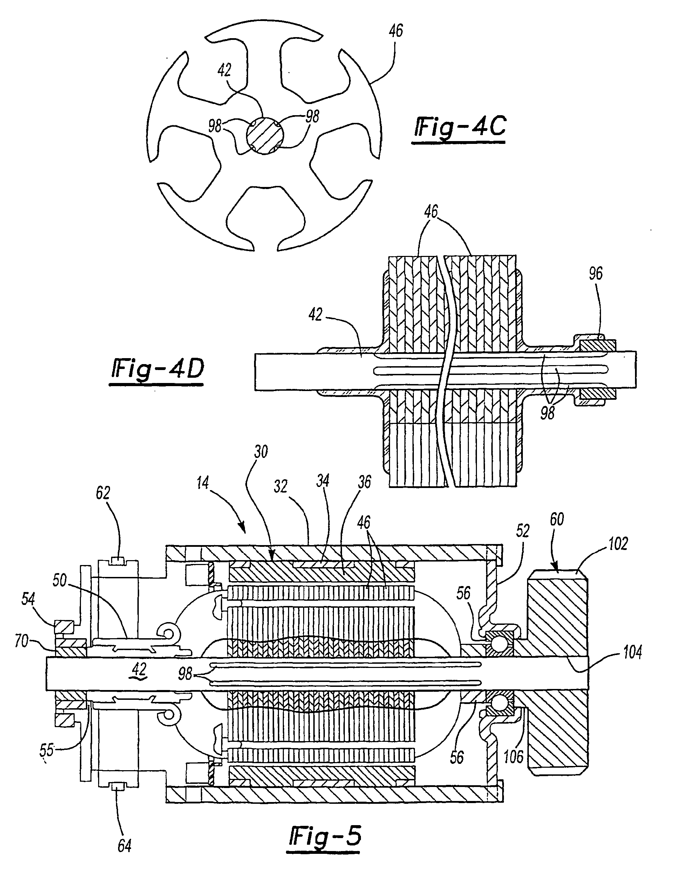

Turning to Figures 4a-4d, parts of the armature shaft assembly 40 in accordance with the present invention are shown. Here, the laminations 46, shaft 42 and retainer 96 are shown. The shaft 42 includes a plurality of stakes 98 which run longitudinally with respect to the axis of the shaft 42. The stakes 98, generally four in number, extend a desired distance along the shaft. However, the stakes 98 do not extend to the ends of the shaft. Thus, smooth portions are at each end of the shaft 42. The stakes do have a desired length in order to receive and retain the laminations 46 as well as the retainer 96. The laminations 46, as seen in Figure 4c, have a desired design with a central aperture which is substantially circular. The laminations 46 are slid onto the shaft over the smooth ends until they are pressed and retained on the stakes 98. Likewise, the retainer 96 is cylindrical, having a cylindrical bore. The retainer 96 slides onto the end of the shaft until it contacts the stakes 98. At that time, the retainer 96 is pressed onto the shaft so that the stakes retain the retainer 96 onto the shaft 42. The retainer 96 is generally metallic or a powder metal part. Accordingly, the retainer 96 can ride directly against the bearing 56 provided that the thrust pressure/velocity limits of the material are not exceeded. This eliminates the need for additional washers between the retainer and sleeve bearing 56. Also, an epoxy coating is on the laminates 46 and retainer 96 to enhance retention on the shaft 42.

Turning to Figure 5, the pinion gear 60 is illustrated. The pinion gear 60 includes teeth 102 as well as a central bore 104. Also, a shoulder 106 is unitarily formed with the pinion gear 60. The shoulder 106 has a desired length and extends towards the end cap 52. In the motor 14, it is critical to maintain a clearance 55 between the commutator 50 and end cap 54. If this clearance is not kept, it is possible that the motor may seize. The shoulder 106 helps to limit the movement of the armature shaft 42 and commutator 50. if the armature shaft 42 slips in the bearings 56 and 70, the pinion shoulder 106 eventually contacts the bearing 56 which is fixed to the end cap 52. Accordingly, the armature shaft 42 may only slip a desired amount so that the commutator clearance is always present to prevent seizing of the motor.

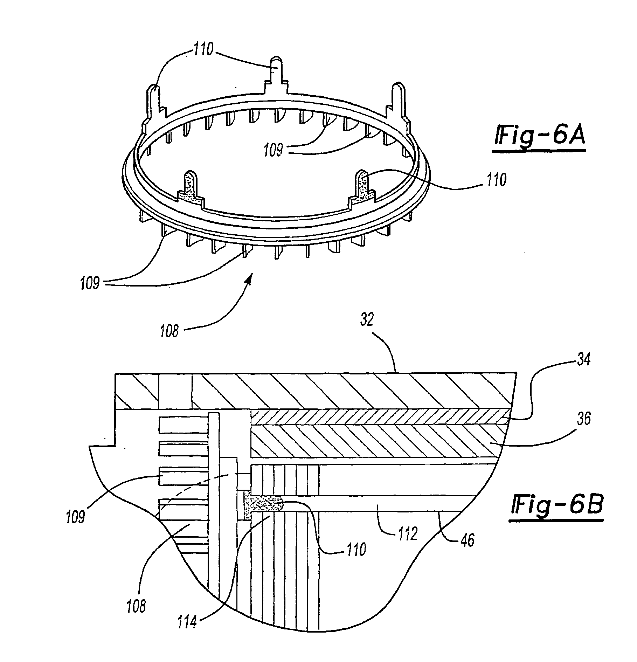

Turning to Figure 6a, the motor fan 108 is illustrated prior to the attachment with the armature 40. As can be seen, the fan 108 has an overall disc shape with blades 109 and a plurality of extending fingers 110. The extending fingers 110 press into gaps 112 in the laminations 46. This is illustrated in Figure 6b. Once the fingers 110 are pressed into the gaps 112, the fan 108 is coupled with the armature 40. After the coupling, an adhesive 114 is placed onto the fingers 110 and laminates 46. At the time the adhesive 114 is applied, it is wet and the adhesive is a first color, preferably a bright yellow. After the adhesive 114 cures, the fan 108 is permanently secured to the armature. After the curing of the adhesive 114, the adhesive changes color to a second color. Preferably, the cured color is brown. Thus, a person assembling the motor may visually determine whether or not the fan has been permanently secured to the laminates. The color brown indicating that the adhesive is cured and, in turn, the fan affixed to the laminates 46. Alternatively, if the fan has just been adhered to the laminates 46, the bright yellow color is present. Thus, the assembler can easily visually detect whether or not the armature, which includes the fan 108, is ready for additional assembly.

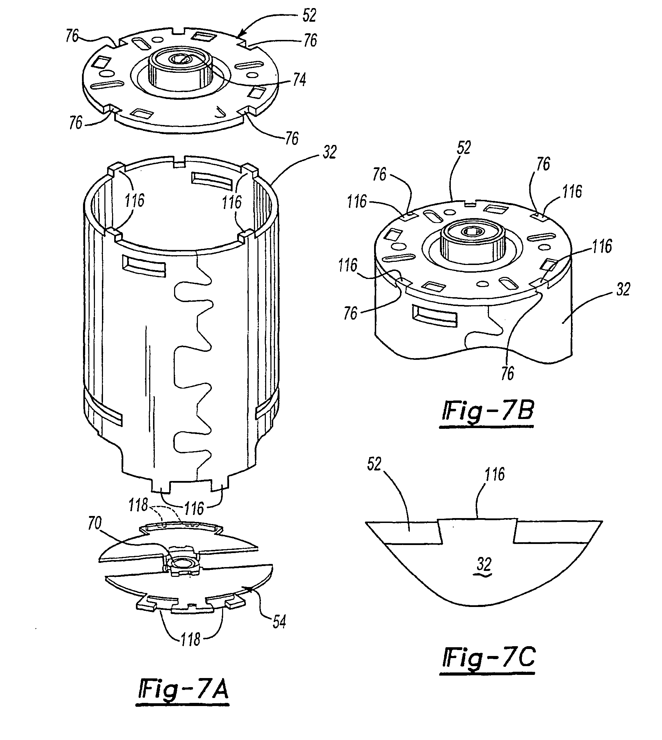

Turning to Figure 7a, the motor can 32 is shown. The motor can 32 includes a plurality of extending fingers 116. The fingers 116 mesh with the recesses 76 in the end cap 52. Also, end cap 54 includes recesses 118 which mesh with the extending fingers 116 on the other end of the motor can 32. As seen in Figure 7b, the end plate 52 has been coupled with the motor can 32 so that the fingers 116 and recesses 76 are in a meshing condition. After the positioning, the fingers 116 are cold worked to deform the fingers 116 so that the end caps are permanently secured to the motor can 32 as illustrated in Figure 7c. As can be seen in Figure 2, the fingers 116 are deformed, having a trapezoidal shape, so that the fingers secure the end cap 52 to the motor housing 32. This cold working is also utilized to retain end cap 54 to the motor can 32.

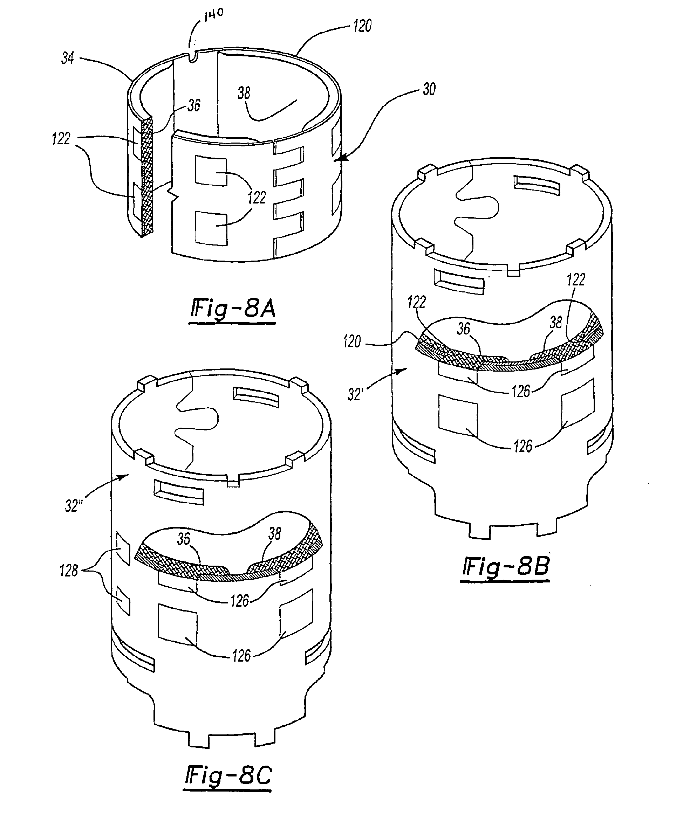

Turning to Figure 8a, the demagnetization stator member 30 is shown. The demagnetization member 30 includes a ring 120 as well as magnets 36 and 38. The ring 120 includes at least one aperture 122 strategically positioned to receive magnetic material as the magnets 36 and 38 are injection molded into the ring 120. Also, the ring includes anchors 124 like those described in pending U.S. Patent Application Serial No. 09/764,004 filed January 17, 2001 entitled ANCHORING SYSTEM FOR INJECTION MOLDED MAGNETS ON A FLUX RING OR MOTOR HOUSING. Also, a plurality of apertures 122 may be strategically positioned around the ring 120. The magnets 36 and 38 are generally a neodymium iron boron material. This material is susceptible to demagnetization due to the amount of time the magnet spends at an elevated temperature as well as due to the armature reaction field. Thus, by adding more magnetic material, demagnetization due to the armature reaction field is reduced. Thus, the thicker the magnet is at specific locations, the better the magnet is at reducing this type of demagnetization. Also, by optimizing the location of the increased thickness magnet, which increases the magnetic strength, this reduces susceptibility to armature reaction demagnetization due to temperature. Accordingly, the thicker magnet partitions are positioned in the highest areas of demagnetization.

Turning to Figure 8b, a motor can 32' is illustrated with apertures 126. Here, the ring 120 would be secured to the motor can prior to the injection molding of the magnets 36 and 38. The apertures 122 would be aligned with apertures 126. Accordingly, when the magnetic material is injection into the ring 120, the magnet material would pass through the aperture 122 into aperture 126 of the can 32'. This, in turn, increases the thickness of the magnet at the desired position. This thickness, in turn, increases resistance to demagnetization.

Turning to Figure 8c, an additional motor can 32" is shown. Here, the magnets 36 and 38 are injection molded directly onto the motor can 32". The apertures 126, as well as the anchors 124, provide their desired features as mentioned above.

The ring 120 includes an alignment notch 140. The alignment notch 140, during the injection molding of the magnets 36, 38, is placed over a pin in the mold tooling. This properly aligns the ring 120 in the tooling which, in turn, enables proper positioning of the magnets 36, 38 on the ring 120 so that the magnets are molded onto the anchors. Also, the notch 140 is used to align the flux ring 120 with respect to the motor can during assembly. Again, the notch 140 is placed over an aligning pin as the ring is positioned into the motor can.

## Claims

1. An armature shaft assembly (40) for a motor (14) having a motor can (32) having two ends, an end cap (52, 54) at each end of said motor can for receiving the ends of the armature shaft assembly, and a stator assembly (30) including a pair of magnets (36, 38) arranged to surround said armature assembly, said stator assembly positioned in said motor can, the armature shaft assembly comprising:
a shaft (42), said shaft including a plurality of stakes (98) in its outer peripheral surface;
said stakes extending a desired length along a longitudinal axis of the shaft;
a plurality of laminates (46) on said shaft, said plurality of laminates having an aperture which slips onto said shaft and is pressed on and retained by said plurality of stakes on said shaft;
a retaining member (96) having a bore, said bore enabling said retainer to slip on said shaft, **characterised by** said retainer being pressed onto said plurality of stakes to maintain position of said retainer on said shaft.

2. An armature shaft assembly according to claim 1, wherein said retainer is a metal part.

3. An armature shaft assembly according to claim 1 or 2, wherein a coating is placed on said laminates and retainer to provide additional resistance against movement with respect to said shaft.

4. A motor assembly (14), comprising:
a motor can (32) having two ends, an end cap (52, 54) at each end of said motor can;
an armature shaft assembly according to any one of the preceding claims in said motor can, wherein said shaft is received in said end caps; and
a stator assembly (30) including a pair of magnets (36, 38) surrounding said armature assembly, said stator assembly positioned in said motor can.

5. A power tool (10), comprising:
a housing (12);
a motor assembly according to claim 4 positioned in said housing;
an output (20) coupled with said motor;
an activation member (16) coupled with said motor for energizing said motor; and
a power source (18) coupled with said motor and activation member for providing power to said tool.

## Patentansprüche

1. Ankerwellenanordnung (40) für einen Motor (14) umfassend ein Motorgehäuse (32) mit zwei Enden, einer Endkappe (52, 54) an jedem Ende des Motorgehäuses zur Aufnahme der Enden der Ankerwellenanordnung und eine Statoranordnung (30), die ein Paar von Magneten (36, 38) umfasst, die angeordnet sind, die Ankerwellenanordnung zu umgeben, wobei die Statoranordnung in dem Motorgehäuse angeordnet ist und die Ankerwellenanordnung aufweist:
eine Welle (42), wobei die Welle eine Vielzahl von Einsätzen (98) in deren äußerer Umfangsfläche aufweist,
wobei die Einsätze sich über eine gewünschte Länge entlang einer Längsachse der Welle erstrecken,
eine Vielzahl von Blechen (46) auf der Welle, die eine Öffnung aufweisen, die auf die Welle gleitet und auf die Vielzahl von Blechen gepresst und durch diese auf der Welle gehalten wird,
ein Halteelement (96) mit einer Bohrung, wobei die Bohrung dem Halteelement ermöglicht, auf die Welle zu gleiten, **gekennzeichnet dadurch, dass** das Halteelement auf die Vielzahl von Einsätzen gepresst wird, um die Position des Halteelements auf der Welle beizubehalten.

2. Ankerwellenanordnung nach Anspruch 1, wobei das Halteelement ein Metallteil ist.

3. Ankerwellenanordnung nach Anspruch 1 oder 2, wobei eine Beschichtung auf den Blechen und dem Halteelement angeordnet ist, um einen zusätzlichen Widerstand gegen eine Bewegung in Bezug auf die Welle zu liefern.

4. Motoranordnung (14) umfassend:
ein Motorgehäuse (32) mit zwei Enden, einer Endkappe (52, 54) an jedem Ende des Motorgehäuses,
einer Ankerwellenanordnung nach einem der vorhergehenden Ansprüche in dem Motorgehäuse, wobei die Welle in den Endkappen aufgenommen ist, und
eine Statoranordnung (30) mit einem Paar von Magneten (36, 38), die die Ankerwellenanordnung umgeben, wobei die Statoranordnung in dem Motorgehäuse angeordnet ist.

5. Angetriebenes Werkzeug (10) mit
einem Gehäuse (12),
einer Motoranordnung nach Anspruch 4, die in dem Gehäuse angeordnet ist,
einem Ausgang (20), der mit dem Motor verbunden ist,
einem Betätigungselement (16), das mit dem Motor zum Versorgen des Motors mit Energie verbunden ist, und
einer Spannungsquelle (18), die mit dem Motor und dem Betätigungselement zum Versorgen des Werkzeugs mit Spannung verbunden ist.

## Revendications

1. Ensemble d'arbre d'induit (40) pour un moteur (14) ayant une carcasse de moteur (32) possédant deux extrémités, un embout (52, 54) au niveau de chaque extrémité de ladite carcasse de moteur pour recevoir les extrémités de l'ensemble d'arbre d'induit, et un ensemble de stator (30) comprenant une paire d'aimants (36, 38) agencés de manière à entourer ledit ensemble d'induit, ledit ensemble de stator étant positionné dans ladite carcasse de moteur, l'ensemble d'arbre d'induit comprenant :
■ un arbre (42), ledit arbre comprenant une pluralité de barrettes (98) dans sa surface périphérique externe ;
■ lesdites barrettes s'étendant sur une longueur souhaitée le long d'un axe longitudinal de l'arbre ;
■ une pluralité de lamelles (46) sur ledit arbre, ladite pluralité de lamelles ayant une ouverture qui coulisse sur ledit arbre et qui est poussée sur ledit arbre et retenue sur celui-ci par ladite pluralité de barrettes ;
■ un élément de retenue (96) comportant un alésage, ledit alésage permettant audit élément de retenue de coulisser sur ledit arbre, **caractérisé en ce que** ledit élément de retenue est poussé sur ladite pluralité de barrettes pour maintenir la position dudit élément de retenue sur ledit arbre .

2. Ensemble d'arbre d'induit selon la revendication 1, dans lequel ledit élément de retenue est une pièce métallique.

3. Ensemble d'arbre d'induit selon la revendication 1 ou 2, dans lequel un revêtement est posé sur lesdites lamelles et ledit élément de retenue pour fournir une résistance au mouvement supplémentaire par rapport audit arbre.

4. Ensemble moteur (14), comprenant :
■ une carcasse de moteur (32) ayant deux extrémités, un embout (52, 54) étant positionné au niveau de chaque extrémité de ladite carcasse de moteur ;
■ un ensemble d'arbre d'induit selon l'une quelconque des revendications précédentes dans ladite carasse de moteur, dans lequel ledit arbre est reçu dans lesdits embouts ; et
■ un ensemble de stator (30) comprenant une paire d'aimants (36, 38) entourant ledit ensemble d'induit, ledit ensemble de stator étant positionné dans ladite carcasse de moteur.

5. Outil électrique (10), comprenant :
■ un boîtier (12) ;
■ un ensemble moteur selon la revendication 4 positionné dans ledit boîtier ;
■ une sortie (20) couplée audit moteur ;
■ un élément d'activation (16) couplé audit moteur pour alimenter ledit moteur ; et
■ un bloc d'alimentation (18) couplé audit moteur et audit élément d'activation pour fournir de l'énergie audit outil.
